# EUROPÄISCHE PATENTSCHRIFT

(11) **EP 0 873 787 B1**
(45) Veröffentlichungstag und Bekanntmachung des Hinweises auf die Patenterteilung: **14.08.2002**
(21) Anmeldenummer: 98107077.4
(22) Anmeldetag: 17.04.1998
(51) Int. Cl.: B01J 31/02, B29C 70/52

(54) **Ketonperoxidhaltige Katalysatorzusammensetzung und deren Verwendung im Pultrusionsverfahren**
Ketone peroxide-based catalytic composition and its use in pultrusion processes
Composition catalytique à base de cétone peroxyde et son utilisation dans la pultrusion

(30) Priorität: 26.04.1997 DE 19717831
(43) Veröffentlichungstag der Anmeldung: 28.10.1998
(73) Patentinhaber: ATOFINA Deutschland GmbH, 40474 Düsseldorf (DE)
(72) Erfinder: Boulkertous, Nabil, Dipl.-Ing., 89312 Günzburg (DE)
(74) Vertreter: Leifert, Elmar, Dr.

(56) Entgegenhaltungen:
- DE-A- 2 952 667
- FR-A- 2 696 751
- US-A- 5 369 197
- US-A- 5 614 299

## Beschreibung

Die Erfindung betrifft peroxidhaltige Katalysatorzusammensetzungen und deren Verwendung als Starter-Peroxidzusammensetzungen im Pultrusionsverfahren.

Im Pultrusionsverfahren lassen sich faserverstärkte Kunststoff-Endlosprofile herstellen. Dabei werden vorgetrocknete Faserrovings in einem Harzbad getränkt und anschließend mittels eines beheizten Düsenwerkzeugs in die gewünschte Profilform gebracht. Durch die eingebrachte Wärme vernetzt das Harz. Einerseits sollte hierbei das Werkzeug wegen der auftretenden hohen Reibungskräfte möglichst kurz sein, andererseits muß das Harz soweit vernetzen, daß das austretende Profil in der folgenden Abzugseinrichtung stabil bleibt (Michaeli, W.: "Einführung in die Kunststoffverarbeitung", Carl Hansen Verlag 1992, Seite 150). Mit anderen Worten, es muß gewährleistet sein, daß die Gelbildungszeit im vorderen Teil des Werkzeugs möglichst kurz ist, um damit die Aushärtungsphase bis zum Verlassen des Werkzeugs zu verlängern. Letztere Anforderung stellt hohe Ansprüche an die im Harzbad gelösten temperatursensitiven Peroxide bzw. Peroxidmischungen, welche den Ablauf des Vernetzungsvorgang und somit auch die Qualität der faserverstärkten Endprodukte bestimmen.

Einen Überblick der im Pultrusionsverfahren bislang eingesetzten Peroxide bietet die Veröffentlichung von Akzo Nobel mit dem Titel "The Pultrusion Process, selection criteria for the cure system" (ausgehändigt auf der Konferenz der European Pultrusion Technology Association, London, 1996). In dieser Veröffentlichung wird eine Einteilung in hochreaktive Starterperoxide (welche im vorderen Werkzeugbereich wirken) und schwächer reaktive Peroxide, die für das endgültige Aushärten verantwortlich sind, vorgenommen.

Die vorliegende Erfindung betrifft erstere, d. h. die Starter-Peroxidzusammensetzungen. Daher wird im folgenden der diesbezügliche Stand der Technik gewürdigt.

In der Veröffentlichung von Akzo Nobel werden die den Stand der Technik bestimmenden Starterperoxide beschrieben, nämlich Bis(4-tert.-butyl-cyclohexyl)peroxydicarbonat und eine Methylisobutylketonperoxid-Formulierung. Standardmäßig wird im Pultrusionsverfahren Bis(4-tert.-butyl-cyclohexyl)peroxydicarbonat eingesetzt. Dieses besitzt einen Peroxidgehalt von 95 Gew.-%, ist jedoch nur in fester Form erhältlich und in ungesättigten Polyesterharzen, wie sie im Pultrusionsverfahren verwendet werden, kaum löslich. Das Peroxydicarbonat muß daher, sofern eine unerwünschte Blasenbildung im Harz vermieden werden soll, in Styren gelöst werden, was einen zusätzlichen Arbeitsschritt beinhaltet. Wird das Bis(4-tert.-butyl-cyclohexyl)peroxydicarbonat in Styren gelagert, so verringert sich dessen Lagerstabilität auf Grund thermischer Polymerisation. Darüber hinaus ist Bis(4-tert.-butyl-cyclohexyl)peroxydicarbonat nur bis 20°C lager und transportstabil, d.h., daß vor allem in wärmeren Regionen oder den wärmeren Monaten des Jahres für eine ausreichende Kühlung gesorgt werden muß. Die mittlere Topfzeit der Bis(4-tert.-butyl-cyclohexyl)peroxydicarbonat enthaltenden Harzzusammensetzungen beträgt zwei Tage, wobei die mittlere Topfzeit die Zeit vom Einrühren des Peroxids bis zum Zeitpunkt, an dem der Ansatz noch verarbeitungsfähig ist, darstellt.

Das zweite in der Veröffentlichung von Akzo Nobel beschrieben Starterperoxid, ist in Form einer Methylisobutylketonperoxid-Formulierung mit einem Peroxidgehalt von 45 Gew.-% auf dem Markt. Dieses besitzt gegenüber Bis(4-tert.-butyl-cyclohexyl)peroxydicarbonat den Vorteil in flüssiger Form vorzuliegen und ist darüber hinaus bei 25°C lagerstabil. Die produktionstechnische Relevanz dieser Formulierung ist trotzdem gering, da die Topfzeiten nur zwischen 6 und 9 Stunden liegen, wodurch die Verarbeitbarkeit der Harz-Peroxid-Zusammensetzung zeitlich und mengenmäßig stark eingeschränkt ist.

Die Aufgabe der vorliegenden Erfindung bestand darin, eine Peroxid-Zusammensetzung bereitzustellen, welche die oben angesprochenen Nachteile der bislang als Starterperoxid eingesetzten Produkte beseitigt und insbesondere als flüssige Formulierung in ungesättigten Polyesterharzen löslich ist, eine höhere Lager- und Transportstabilität besitzt und lange Topfzeiten gewährleistet, ohne daß dabei eine Verschlechterung der Qualität der Endprodukte eintritt.

Diese Aufgabe wird überraschenderweise durch eine peroxidhaltige Katalysatorzusammensetzung gelöst, die
60 bis 80 Gew.-% einer Ketonperoxidkomponente (A)
10 bis 20 Gew.-% einer Ketoesterkomponente (B) und
10 bis 20 Gew.-% eines Inhibitors (C)
umfaßt, wobei sich Komponente (A) gegenüber Komponente (B) inert verhält und die Summe der Gewichtsprozentanteile der Komponenten (A), (B) und (C) 100 Gew.-% beträgt.

Bevorzugt beträgt der Gewichtsprozentanteil der Komponente (A) 65 bis 75 Gew.-%, der Anteil der Komponente (B) 12,5 bis 17,5 Gew.-% und der Anteil der Komponente (C) 12,5 bis 17,5 Gew.-%, wobei die Summe der Gewichtsprozentanteile der Komponenten (A), (B) und (C) 100 Gew.-% beträgt.

Die Ketonperoxidkomponente (A) besteht wiederum zu 40 bis 60 Gew.-% aus einem oder mehreren monomeren Ketonperoxiden oder einer Mischung von monomeren und dimeren Ketonperoxiden, zu 15 bis 40 Gew.-% aus einem Phlegmatisierungsmittel, zu 1 bis 10 Gew.-% aus einem β-Hydroxyketon, zu 1 bis 5 Gew.-% aus Wasserstoffperoxid, zu 1 bis 10 Gew.-% aus Wasser und zu 5 bis 15 Gew.-% aus einem Keton, wobei die Summe der Komponenten 100 Gew.-% beträgt.

Als Ketonperoxide können beispielsweise Methylisobutylketonperoxid, Methylethylketonperoxid, Acetylacetonperoxid oder Cyclohexanonperoxid eingesetzt werden, wobei Methylisobutylketonperoxid bevorzugt wird. Die Peroxide liegen hauptsächlich in ihrer monomeren Form vor, enthalten jedoch untergeordnete Anteile an Dimeren. Das bevorzugte Methylisobutylketonperoxid kann bereits ohne Zusatz von Beschleunigern im Polyesterharz bei 60 °C im Pultrusionsprozeß eingesetzt werden, während Methylethylketonperoxid, Acetylacetonperoxid und Cyclohexanonperoxid normalerweise erst ab 80 °C eingesetzt werden können. Unter gleichen Bedingungen, wie denen beim Einsatz von Methylisobutylketon, eröffnen sich jedoch dort neue Anwendungen, wo extrem hohe Topfzeiten wünschenswert sind. In einigen Fällen läßt sich die Topfzeit um das 10fache verlängern (siehe auch Tabelle 2).

Als Phlegmatisierungsmittel können sämtliche handelsüblichen Phlegmatisierungsmittel eingesetzt werden, bevorzugt sind hierbei Phthalsäureester, besonders bevorzugt ist Phthalsäuredimethylester.

Die Ketoesterkomponente (B) dient vornehmlich als Lösungsmittel für die Ketonperoxide und Inhibitoren. Zwar gibt es diverse Lösungsmittel für Inhibitoren, jedoch sind diese oft ungeeignet Ketonperoxide zu lösen. Als geeignet haben sich Ketoester herausgestellt. Deren Auswahl ist jedoch kritisch, da manche Ketoester dazu neigen, mit den Ketonperoxiden zu reagieren. So ist zum Beispiel Acetessigester zur Lösung von Acetylacetonperoxid bedingt geeignet, besitzt jedoch ein hohes Reaktionsvermögen gegenüber den anderen erfindungsgemäßen Ketonperoxiden, d. h. daß eine starke Abnahme des Aktiv-Sauerstoffs (siehe Tabelle 2) resultiert. Eine derartige Reaktivität ist bereits aus Sicherheitsgründen nicht akzeptabel. Eine Vorauswahl der Ketoesterkomponente kann z. B. mittels der "Eisen(III)chlorid-Probe" durchgeführt werden. Wird ein Eisen(III)enolat gebildet, so ist die geprüfte Ketoesterkomponente in der erfindungsgemäßen Zusammensetzung meist ungeeignet. Als Ketoesterkomponente (B) können daher nur solche Ketoester eingesetzt werden, die nicht mit der Ketonperoxidkomponente (A) reagieren, bevorzugt ist hierbei der Einsatz von Lävulinsäure-n-butylester, welcher sich gegenüber allen getesteten Ketonperoxiden inert verhält.

Die Aufgabe der Inhibitorkomponente (C) besteht darin, die Topfzeit der Harzzusammensetzung durch das Abfangen gebildeter Peroxidradikale zu verlängern. Kritisch ist hierbei jedoch die Konzentration der Inhibitorkomponente. Ist die Konzentration des Inhibitors zu niedrig, so führt dies zu einer deutlichen Verkürzung der Topfzeit, ist sie zu hoch, so werden keine klaren Lösungen gebildet. Es ist daher wesentlich, die Inhibitorkonzentration so zu wählen, daß sie 10 bis 20 Gew.-%, bevorzugt 12,5 bis 17,5 Gew.-% in der Mischung aus Komponenten (A), (B) und (C) beträgt. Als Inhibitorkomponente (C) kommen verschiedene tert.-Butyl-substituierte Phenolderivate in Frage, wie z.B. 2,6-Di-t-butylphenol, 2,4,6-Tri-t-butylphenol, 2,6-Di-t-butyl-4-nonylphenol, 6-t-Butyl-2,4-dimethylphenol und 2,6-Di-t-butyl-4-methylphenol, wobei letzteres bevorzugt eingesetzt wird. Als Inhibitor können desweiteren Hydrochinon, Hydrochinonmethylester und p-Benzochinon eingesetzt werden.

Neben der Bereitstellung von Peroxidzusammensetzungen betrifft die Erfindung die Verwendung der Peroxidzusammensetzungen als Starterperoxid-Zusammensetzungen im Pultrusionsverfahren. Hierbei beträgt die Konzentration der erfindungsgemäßen Peroxidzusammensetzung in der Harzzusammensetzung bevorzugt 0,5 bis 1,0 Gew. %. Besonders bevorzugt beträgt der Peroxidgehalt in der Harzzusammensetzung 0,6 bis 0,8 Gew.-%, wobei als Grundkomponente der Harzzusammensetzung ein ungesättigtes Polyesterharz, Vinylesterharz oder Low-Profile-Harz in Frage kommt.

Die erfindungsgemäße Starterperoxidformulierung entfaltet ihre Wirkung bei 50 bis 90°C, bevorzugt bei 60 bis 80°C und wird besonders vorteilhaft in solchen Pultrusionsmaschinen eingesetzt, deren Heizzonen auf diesen Temperaturbereich abgestimmt sind.

Neben der erfindungsgemäßen Peroxidzusammensetzung enthält die Harzzusammensetzung auch 1 bis 2 Gew.-% eines oder mehrerer Perester oder Perketale zur Vervollständigung der Polymerisation und Reduktion des Reststyrolgehalts. Desweiteren kann die Harzzusammensetzung die für Low-Profile-Harze üblichen Pigmente, wie z.B. Titandioxide und Füllstoffe, wie z.B. Calciumcarbonat und Aluminiumhydroxid und Trennmittel enthalten. Die Low-Profile-Harze können darüber hinaus thermoplastische Additive, wie z. B. Polyvinylacetat oder Poly(methylmethacrylat) enthalten.

Durch die Verwendung der erfindungsgemäßen Peroxidzusammensetzung im Pultrusionsverfahren werden Topfzeiten von 5 bis 10 Tagen erreicht, diese liegen somit 2 bis 5 mal höher als die für Bis(4-tert.-butyl-cyclohexyl)peroxydicarbonat bzw. bis zu 20 mal höher als für die Methylisobutylketonperoxid-Formulierungen der AKZO-Nobel Veröffentlichung.

Auch die Lagerstabilität (Lagertemperatur) der erfindungsgemäßen Zusammensetzung ist mit 30 °C deutlich höher, als die der zum Stand der Technik gehörenden Peroxide bzw. Peroxidzusammensetzungen (Bis(4-tert.-butyl-cyclohexyl)peroxidicarbonat: 20 °C; AKZO-Nobels Methylisobutylketonperoxid-Formulierung: 25 °C)

Im folgenden wird die vorliegende Erfindung anhand von Ausführungsbeispielen und Vergleichsexperimenten näher erläutert.

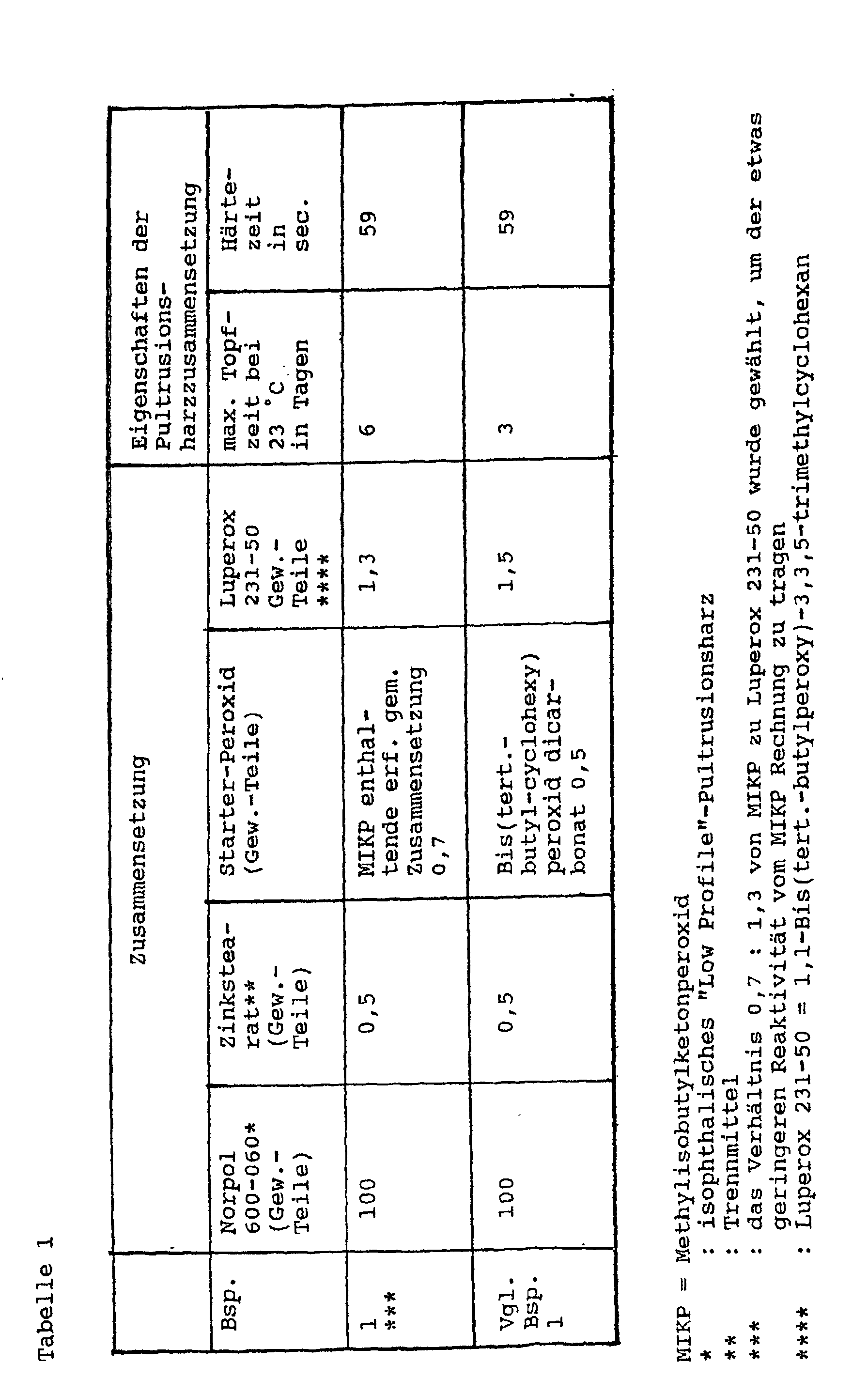

**Tabelle 1**

| Fortsetzung | | | | | |
|---|---|---|---|---|---|
| Zusammensetzung | mechanische Eigenschaften von pultrudierten Laminaten | | | | Reststyrengehalt in % |
| | Biegefestigkeit in Längsrichtung | Biegefestigkeit in Querrichtung | Biegemodul in Längsrichtung | Biegemodul in Querrichtung | |
| Bsp. 1 | 380 | 190 | 12000 | 9600 | 0.1 |
| Vgl. Bsp. 1 | 370 | 180 | 12000 | 9000 | 0.085 |

Tabelle 1 enthält eine Zusammenstellung der Eigenschaften einer Low-Profile Pultrusionsharz-Zusammensetzung, der mechanischen Eigenschaften der daraus erzeugten pultrudierten Laminate und des Reststyrengehalts in den pultrudierten Laminaten. Hierbei wurde in Beispiel 1 eine erfindungsgemäße Methylisobutylketonperoxid enthaltende Starterperoxid-Zusammensetzung eingesetzt, während in Vergleichsbeispiel 1 das zum Stand der Technik gehörende Bis(tert.-butylcyclohexyl)peroxydicarbonat verwendet wurde. Der Tabelle 1 ist zu entnehmen, daß die mechanischen Eigenschaften der pultrudierten Laminate, als auch der Reststyrengehalt für Beispiel 1 und Vergleichsbeispiel 1 vergleichbar sind, d. h. das pultrudierte Laminate mit vergleichbarer Qualität erhalten werden. Betrachtet man die Eigenschaften der Pultrusionsharzzusammensetzung vor der Aushärtung, so zeigt sich, daß die Zusammensetzung aus Beispiel 1 gegenüber der des Vergleichsbeispiels 1 bezüglich der Topfzeit trotz gleicher Härtezeit stark überlegen ist. Dies liegt daran, daß die Pultrusionsharzzusammensetzung des Beispiels 1 eine erfindungsgemäße Starterperoxid-Zusammensetzung enthält, welche es ermöglicht, längere Topfzeiten für die Pultrusionsharz-Zusammensetzung zu erhalten.

**Tabelle 2**

| | Zusammensetzung der Peroxidformulierung | | | Eigenschaften | |
|---|---|---|---|---|---|
| Bsp. | Ketonperoxid (a1) (Teile Komponente A) | Ketoester (B) (Teile) | Inhibitor (C) (Teile) | Abnahme des Aktiv-Sauerstoffs nach 5 Tagen bei 50° C in % | Topfzeit bei einer Harz-temperatur von 20 °C in Tagen |
| 2 | MIKP (70) | LSBE (15) | DTBC (15) | 1,8 | 5 |
| 3 | AAP(70) | LSBE (15) | DTBC (15) | 1,7 | 54 |
| 4 | MEKP (70) | LSBE (15) | DTBC (15) | 1,1 | 35 |
| 5 | CHP (70) | LSBE (15) | DTBC (15) | 3,3 | 26 |
| Vgl.bsp. | | | | | |
| 2a | MIKP (70) | AEE (15) | DTBC (15) | 10,5 | 2 |
| 2b | MIKP (100) | - | - | 1,4 | <1 |
| 3a | AAP (70) | AEE (15) | DTBC (15) | 2,4 | 36 |
| 3b | AAP(100) | - | - | 2,3 | 6 |
| 4a | MEKP (70) | AEE (15) | DTBC (15) | 10,8 | NB |
| 4b | MEKP (100) | - | - | 1,6 | < 1 |
| 5a | CHP (70) | AEE (15) | DTBC (15) | 11,8 | 19 |
| 5b | CHP (100) | - | - | 4,6 | <1 |
| MIKP = Methylisobutylketonperoxid; AAP = Acetylacetonperoxid; | | | | | |
| MEKP = Methylethylketonperoxid; CHP = Cyclohexanonperoxid | | | | | |
| LSBE = Lävulinsäure-n-butylester | | | | | |
| DTBC = 2,6-Di-tert.-butyl-4-methylphenol (= "Di-tert.-butyl-cresol") | | | | | |

In Tabelle 2 werden den erfindungsgemäßen Beispielen 2 bis 5 je zwei Vergleichsbeispiele mit der entsprechenden Numerierung und Bezeichnung a und b gegenübergestellt. Die Beispiele 2 bis 5 stellen ihrerseits verschiedene erfindungsgemäße Ketonperoxide (Komponente (a1) der Komponente (A)) bei konstantem Gewichtsteilverhältnis zu Lävulinsäure-n-butylester (15 Gew.-%; Komponente (B)) und DTBC (15 Gew.-%, Komponente (C)), gelöst in einem hochreaktiven UP-Harz (Palatal® P6 der BASF AG) einander gegenüber. Der Vergleich der erfindungsgemäßen Beispiele untereinander zeigt, daß unter gleichen Bedingungen die Acetylacetonperoxid, Methylenethylketonperoxid und die Cyclohexanonperoxid enthaltenden Zusammensetzungen deutlich verlängerte Topfzeiten gegenüber der Methylisobutylketonperoxid enthaltenden Zusammensetzung besitzen. Diese können vor allem dort eingesetzt werden, wo extrem lange Topfzeiten wünschenswert sind.

Die in den Vergleichsbeispielen a dargestellten Zusammensetzungen enthalten anstelle des Lävulinsäure-n-butylesters Acetessigsäureethylester. Im Fall der Methylisobutylketonperoxid-Zusammensetzung (Vergleichsbeispiel 2a), der Methylethylketonperoxid-Zusammensetzung (Vergleichsbeispiel 4a) und der Cyclohexanonperoxid-Zusammensetzung (Vergleichsbeispiel 5a) ist ersichtlich, daß bei der Lagerung bei 50 °C innerhalb von 5 Tagen eine starke Abnahme des Aktivsauerstoffs stattfindet. Dies gilt auch, jedoch in deutlich geringerem Ausmaß, für die Acetylacetonperoxid-Zusammensetzung. Diese Ergebnisse sind darauf zurückzuführen, daß Acetylessigsäureethylester eine deutlich stärkere Reaktivität gegenüber den entsprechenden Ketonperoxiden besitzt, weshalb er als Ketoester in den entsprechenden Formulierungen nicht eingesetzt werden sollte. Dies unterstreicht die Bedeutung der Auswahl eines speziellen Ketoesters als Komponente (B), welche erfindungsgemäß nicht mit Komponente (A) reagieren soll.

Die mit b bezeichneten Vergleichsbeispiele stellen Formulierungen dar, die weder Komponente (B) noch Komponente (C) enthalten. Diese Formulierungen zeigen zwar keine entsprechende Abnahme des Aktivsauerstoffs bei der fünftägigen Lagerung bei 50 °C, besitzen jedoch stark verkürzte Topfzeiten, welche eine sinnvolle Verarbeitbarkeit der entsprechenden Pultrusionsharzzusammensetzungen nicht ermöglichen. Darüber hinaus ist zu bemerken, daß dies der Fall ist, obgleich die in den Vergleichsbeispielen b eingesetzte Peroxidmenge, bezogen auf das hochreaktive UP-Harz (Palatal® P6 der BASF AG) nur 0,5 % beträgt, während in den anderen Beispielen (Beispiele 2 - 5 und 2a bis 5a) 0,7 % des Peroxids in der Harzzusammensetzung eingesetzt wurde.

Die Bestimmung des Aktivsauerstoffgehalts erfolgte mit der dem Fachmann bekannten jodometrischen Titrationsmethode.

## Patentansprüche

1. Peroxidhaltige Katalysatorzusammensetzung, **dadurch gekennzeichnet, daß** diese
60 bis 80 Gew. - % einer Ketonperoxidkomponente (A),
10 bis 20 Gew.-% einer Ketonesterkomponente (B) und
10 bis 20 Gew.-% einer Inhibitorkomponente (C)
umfaßt, wobei sich Komponente (A) gegenüber Komponente (B) inert verhält und die Summe der Gewichtsprozentanteile der Komponenten (A), (B) und (C) 100 Gew.-% beträgt.

2. Peroxidhaltige Katalysatorzusammensetzung gemäß Anspruch 1, **dadurch gekennzeichnet, daß** der Anteil der Komponente (A) zwischen 65 und 75 Gew.-%, der Anteil der Komponente (B) zwischen 12,5 und 17,5 Gew.-% und der Anteil der Komponente (C) zwischen 12,5 und 17,5 Gew.-% beträgt, und die Summe der Gewichtsprozentanteile der Komponenten (A), (B) und (C) 100 Gew.-% beträgt.

3. Peroxidhaltige Katalysatorzusammensetzung gemäß einem der Ansprüche 1 oder 2, **dadurch gekennzeichnet, daß** die Komponente (A) sich aus
(a1) 40 bis 60 Gew.-% eines monomeren Ketonperoxids oder einer Monomeren-Dimeren-Mischung des Ketonperoxids,
(a2) 15 bis 45 Gew.-% eines Phlegmatisierungsmittels,
(a3) 5 bis 15 Gew.-% eines Ketons
(a4) 1 bis 10 Gew.-% eines β-Hydroxyketons,
(a5) 1 bis 5 Gew.-% Wasserstoffperoxid und
(a6) 1 bis 10 Gew.-% Wasser zusammensetzt,
wobei die Summe der Komponenten (a1) bis (a6) 100 Gew.-% beträgt.

4. Peroxidhaltige Katalysatorzusammensetzung gemäß einem der Ansprüche 1 bis 3, **dadurch gekennzeichnet, daß** das Ketonperoxid der Komponente (a1) Methylisobutylketonperoxid, Methylethylketonperoxid, Acetylacetonperoxid oder Cyclohexanonperoxid ist.

5. Peroxidhaltige Katalysatorzusammensetzung gemäß einem der Ansprüche 1 bis 4, **dadurch gekennzeichnet, daß** das Phlegmatisierungsmittel (a2) ein Phthalsäureester ist.

6. Peroxidhaltige Katalysatorzusammensetzung gemäß einem der Ansprüche 1 bis 5, **dadurch gekennzeichnet, daß** die Ketoesterkomponente (B) Lävulinsäure-n-butylester ist.

7. Peroxidhaltige Katalysatorzusammensetzung gemäß einem der Ansprüche 1 bis 6, **dadurch gekennzeichnet, daß** der Inhibitor (C) ein tert.-Butyl-substituiertes Phenolderivat ist.

8. Verwendung einer peroxidhaltigen Katalysatorzusammensetzung gemäß einem der Ansprüche 1 bis 7, **dadurch gekennzeichnet, daß** die peroxidhaltige Katalysatorzusammensetzung als StarterStarter-Peroxidzusammensetzung im Pultrusionsverfahren eingesetzt wird, wobei die Konzentration der Starter-Peroxidzusammensetzung in der Harzzusammensetzung 0,5 bis 1,0 Gew.-% bezogen auf die Harzzusammensetzung beträgt.

## Claims

1. A peroxide-containing catalyst composition, **characterised in that** it comprises
60 to 80 % by weight of a ketone peroxide component (A),
10 to 20 % by weight of a ketone ester component (B) and
10 to 20 % by weight of an inhibitor component (C),
wherein component (A) behaves in an inert manner in relation to component (B) and the sum of the proportions by weight of components (A), (B) and (C) is 100 % by weight.

2. A peroxide-containing catalyst composition according to the claim 1, **characterised in that** a proportion of component (A) is between 65 and 75 % by weight, the proportion of component (B) is between 12.5 and 17.5 % by weight and the proportion of component (C) is between 12.5 and 17.5 % by weight, and the sum of the proportions by weight of components (A), (B) and (C) is 100 % by weight.

3. A peroxide-containing catalyst composition according to either one of claims 1 or 2, **characterised in that** component (A) comprises
a1) 40 to 60 % by weight of a monomeric ketone peroxide or of a mixture of monomers and dimers of the ketone peroxide,
a2) 15 to 45 % by weight of a plasticizer,
a3) 5 to 15 % by weight of a ketone,
a4) 1 to 10 % by weight of a β-hydroxyketone,
a5) 1 to 5 % by weight of hydrogen peroxide, and
a6) 1 to 10 % by weight of water,
wherein the sum of components a1) to a6) is 100 % by weight.

4. A peroxide-containing catalyst composition according to any one of claims 1 to 3, **characterised in that** the ketone peroxide of component a1) is methyl isobutyl ketone peroxide, methyl ethyl ketone peroxide, acetylacetone peroxide or cyclohexanone peroxide.

5. A peroxide-containing catalyst composition according to any one of claims 1 to 4 **characterised in that** the plasticizer a2) is a phthalic acid ester.

6. A peroxide-containing catalyst composition according to any one of claims 1 to 5 **characterised in that** the ketoester component (B) is levulinic acid n-butyl ester.

7. A peroxide-containing catalyst composition according to any one of claims 1 to 6, **characterised in that** the inhibitor (C) is a tert.-butyl-substituted phenol derivative.

8. The use of a peroxide-containing catalyst composition according to any one of claims 1 to 7, **characterised in that** the peroxide-containing catalyst composition is used as a starter peroxide composition in the pultrusion process, wherein the concentration of the starter peroxide composition in the resin composition is 0.5 to 1.0 % by weight with respect to the resin composition.

## Revendications

1. Composition de catalyseur contenant un peroxyde, **caractérisée en ce que** celle-ci comprend
de 60 à 80 % en poids d'un composant de type peroxyde de cétone (A),
de 10 à 20 % en poids d'un composant de type cétone-ester (B) et
de 10 à 20 % en poids d'un composant inhibiteur (C)
le composant (A) ayant un comportement inerte à l'égard du composant (B) et la somme des pourcentages en poids des composants (A), (B) et (C) étant de 100 % en poids.

2. Composition de catalyseur contenant un peroxyde selon la revendication 1, **caractérisée en ce que** la proportion du composant (A) est comprise entre 65 et 75 % en poids, la proportion du composant (B) est comprise entre 12,5 et 17,5 % en poids et la proportion du composant (C) est comprise entre 12,5 et 17,5 % en poids, et la somme des pourcentages en poids des composants (A), (B) et (C) est de 100 % en poids.

3. Composition de catalyseur contenant un peroxyde selon la revendication 1 ou 2, **caractérisée en ce que** le composant (A) se compose de
(a1) 40 à 60 % en poids d'un peroxyde de cétone monomère ou d'un mélange de monomère et de dimère du peroxyde de cétone,
(a2) 15 à 45 % en poids d'un agent de stabilisation,
(a3) 5 à 15 % en poids d'une cétone,
(a4) 1 à 10 % en poids d'une β-hydroxycétone,
(a5) 1 à 5 % en poids de peroxyde d'hydrogène et
(a6) 1 à 10 % en poids d'eau,
la somme des composants (a1) à (a6) étant de 100 % en poids.

4. Composition de catalyseur contenant un peroxyde selon l'une quelconque des revendications 1 à 3, **caractérisée en ce que** le peroxyde de cétone du composant (a1) est le peroxyde de méthylisobutylcétone, le peroxyde de méthyléthylcétone, le peroxyde d'acétylacétone ou le peroxyde de cyclohexanone.

5. Composition de catalyseur contenant un peroxyde selon l'une quelconque des revendications 1 à 4, **caractérisée en ce que** l'agent de stabilisation (a2) est un ester d'acide phtalique.

6. Composition de catalyseur contenant un peroxyde selon l'une quelconque des revendications 1 à 5, **caractérisée en ce que** le composant cétoester (B) est le lévulate de n-butyle.

7. Composition de catalyseur contenant un peroxyde selon l'une quelconque des revendications 1 à 6, **caractérisée en ce que** l'inhibiteur (C) est un dérivé de phénol substitué par le groupe tert-butyle.

8. Utilisation d'une composition de catalyseur contenant un peroxyde selon l'une quelconque des revendications 1 à 7, **caractérisée en ce qu'**on utilise la composition de catalyseur contenant un peroxyde en tant que composition de peroxyde initiateur dans le procédé de pultrusion, la concentration de la composition de peroxyde initiateur dans la composition de résine allant de 0,5 à 1,0 % en poids, par rapport à la composition de résine.
